# EUROPEAN PATENT SPECIFICATION

(11) **EP 2 128 501 B1**
(45) Date of publication and mention of the grant of the patent: **12.02.2014**
(21) Application number: 07850457.8
(22) Date of filing: 12.12.2007
(51) Int. Cl.: F16J 15/32

(54) **HERMETIC SEALING DEVICE**
HERMETISCHE DICHTUNGSVORRICHTUNG
DISPOSITIF DE SCELLEMENT HERMÉTIQUE

(30) Priority: 29.01.2007 JP 2007017639
(43) Date of publication of application: 02.12.2009
(73) Proprietor: NOK Corporation, Minato-ku Tokyo 105-8585 (JP)
(72) Inventor: KOBAYASHI, Naoto, Fukushima-shi Fukushima 960-1102 (JP)
(74) Representative: TBK
(86) International application number: PCT/JP2007/073906
(87) International publication number: WO 2008/093468

(56) References cited:
- EP-A1- 1 475 548
- JP-A- 2003 097 725
- JP-A- 2003 343 738
- JP-A- 2004 263 738
- JP-A- 2005 220 931
- JP-U- 01 163 256
- JP-U- 02 136 860
- JP-U- 06 080 956
- JP-U- 59 067 624
- JP-U- 61 165 885
- US-A1- 2005 134 003

## Description

### BACKGROUND OF THE INVENTION

### Field of the Invention

The present invention relates to a sealing device and it particularly relates to a sealing device having a side lip. The sealing device according to the present invention is used as, for example, a hub bearing seal (hub seal) in automobile-related industries or in general industrial machinery or the like.

### Description of the Conventional Art

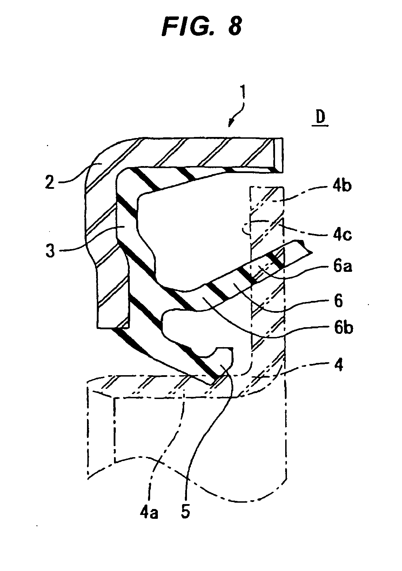

Conventionally, as shown in FIG. 8, there has been known a sealing device 1 having integrally a main lip 5 brought into slidably in tight contact with an outer peripheral surface of a cylinderical portion 4a of a slinger 4 as a mate member of sliding and a side lip 6 formed integrally with the main lip 5 and brought into slidably in tight contact with an axially end surface 4c of a flange portion 4b of the slinger 4 by a rubber-like elastic body 3 that is vulcanized and bonded to a mounting ring 2.

The sealing device 1 having above-mentioned structure is capable of effectively sealing exterior dust D such as muddy water by both the side lip 6 and the main lip 5 coming into slidably in tight contact with the slinger 4. A driven shaft (not shown) on which the slinger 4 is fixed may sometimes unstably rotate in a state of varying the direction of its rotational axis, thereby causing surface shaking of the slinger 4 so that the slinger 4 is displaced in an axial direction relatively to the side lip 6. When the slinger 4 is displaced in an axial direction relatively to the side lip 6, the contact width and tightening margin of the side lip 6 in relation to the slinger 4 increases or decreases. That is, while the side lip 6 has at its distal side a contact part 6a brought into slidably in tight contact with the slinger 4 and at its proximal side a non-contact part 6b formed integrally with the contact part 6a to be not in contact with the slinger 4, the width of the contact part 6a increases or decreases together with the lip tightening margin. Specifically, as shown in the drawings, when the slinger 4 is displaced leftwards relatively to the side lip 6, the contacting width of the side lip 6 is increased with lip tightening margin. On the other hand, when the slinger 4 is displaced rightwards relatively to the side lip 6, the contacting width of the side lip 6 is decreased with lip tightening margin.

Therefore, in the conventional art technique, the sliding resistance of the side lip 6 becomes largest when the slinger 4 is displaced leftwards relatively to the side lip 6 and the width of the contact part 6a increases with the lip tightening margin. If taking no measures to meet the situation, the side lip 6 may wear out at an early stage due to the sliding resistance.

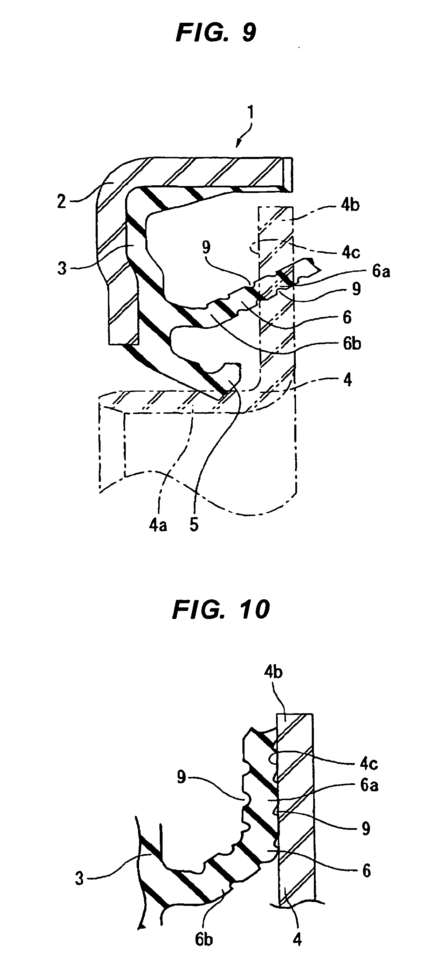

With this respect, the applicant of the present application has proposed an improved sealing device 1 as shown in Fig. 9, prior to the present application, wherein parallel grooves 9 are provided on the both side surfaces of the side lip 6 in order to improve the flexibility thereof. According to such prior art, it is possible to improve the flexibility and to reduce the sliding registance of the side lip 6 (refer to Patent Document 1).

However, according to this prior art, since the parallel grooves 9 are formed extending around the entire side lip 6 from the contact part 6a to the non-contact part 6b, a part of the parallel grooves 9 always comes in contact with the slinger 4 regardless of the lip tightening margin being large or small, as shown in Fig. 10. Therefore, by just that much of the extra contact, there is the possibility that the contact state of the side lip 6 to the slinger 4 (distribution of sealing surface pressure) becomes unstable.

### Patent Document 1:

Japanese unexamined patent publication No. 2004-263797

Furthermore, a sealing device according to the preamble of claim 1 is known from JP 2003 097725 A. Other sealing devices are disclosed in JP 61 165 885 U and JP 2005 220931 A.

### SUMMARY OF THE INVENTION

### Problem to be Solved by the Invention

The present invention is made by taking the above-mentioned point into consideration, and an object of the present invention is to provide a sealing device which is capable of stabilizing contact state of the side lip and which is configured to reduce the sliding resistance of the side lip when the lip tightening margin becomes maximum.

### Means for Solving the Problem

In order to achieve the above-mentioned object, in accordance with claim 1 of the present invention, there is provided a sealing device comprising a side lip brought to be slidably in tight contact with a mate member, the side lip having a contact part at its distal side brought to be slidably in tight contact with the mate member and a non-contact part at its proximal side not in contact with the mate member, and the side lip being configured so that the width of the contact part and lip tightening margin are increased or decreased when the mate member is displaced in an axial direction relatively to the side lip, wherein the contact part of the side lip has a contact surface having a cross section of a straight shape in a free state, the non-contact part of the side lip has a grease holding portion for holding grease which is to be supplied to the contact part, and the grease holding portion provided at the non-contact part of the side lip is arranged at such a position as to be a boundary between the contact part and the non-contact part when the width of the contact part and the lip tightening margin become maximum.

Further, in accordance with the first alternative of the present invention, the grease holding portion comprises an annular groove formed on a surface of the non-contact part.

Furthermore, in accordance with the second alternative of the present invention, the grease holding portion comprises grooves equidistantly formed on a surface of the non-contact part.

In the sealing device provided with the above-mentioned structure in accordance with claim 1 of the present invention, the contact part of the side lip has a contact surface having a cross section of a straight shape in a free state, and the non-contact part of the side lip has a grease holding portion for holding grease which is to be supplied to the contact part. Further, the grease holding portion provided at the non-contact part of the side lip is arranged at such a position as to be a boundary between the contact part and the non-contact part when the width of the contact part and the lip tightening margin become maximum. In the present invention, the term "straight shape" means a flat and smooth surface where functional concavity and convexity of any kind are not provided at all on the lip surface.

Therefore, since the cross section of the contact surface at the contact part of the side lip is of a straight shape in a free state, there is provided no concave that might render the contact state unstable like the parallel grooves in the prior art device. The contact part can be stably and slidably in tight contact with the mate member along its overall width.

Further, when the mate member is displaced relatively to the side lip so that the width of the contact part and the lip tightening margin become maximum, the grease holding portion provided in advance at the non-contact part of the side lip is positioned at a boundary between the contact part and the non-contact part, thereby lubricating grease can be supplied stably from the grease holding portion to the contact part. In order to secure such operation, the grease holding portion is provided at such a position as to be slightly apart from the mate member in an ordinary operation (at the time the lip tightening margin takes an intermediate value).

Further, the grease holding portion is provided in the form of concavity or concavities on the surface of the non-contact part of the side lip to reserve lubricating grease. Specifically, it is suitable for the grease holding portion to be formed in an annular groove or radial grooves, because lubricating is necessary to be done over the entire circumference of the side lip.

### Effect of the Invention

The present invention has the following advantages.

In the sealing device according to claim 1 of the invention, there is provided no concavity that might render the contact state unstable like the parallel groves in the prior art device according to patent document 1, since the cross section of the contact surface at the contact part of the side lip is of a straight shape in a free state, thereby the contact part can be stably and slidably brought into tight contact with the mate member along its overall width. As a result, the contact state of the side lip to the mate member can be stabilized to attain stable sealing performance.

Further, lubricating grease can be supplied stably from the grease holding portion to the contact part, since the grease holding portion is brought to be positioned at a boundary between the contact part and the non-contact part when the width of the contact part and the lip tightening margin become maximum. Therefore, increase in sliding resistance of the side lip can be suppressed by the lubricating function of the grease, and generation of abrasion due to sliding movement can also be suppressed.

Therefore, according to the present invention, it is possible to attain the intended object of the invention by providing a sealing device which is capable of stabilizing contact state of the side lip and which is configured to reduce the sliding resistance of the side lip when the lip tightening margin becomes maximum.

Further, in accordance with the first alternative of the present invention, the side lip can be improved in flexibility, since the grease holding portion is provided in the form of an annular groove, thereby the sliding resistance of the side lip can be reduced. Further, it can be expected for the distal end of the side lip not to become separated from the mate member when the lip tightening margin becomes large.

Furthermore, in accordance with the second alternative of the present invention, since the grease holding portion is provided in the form of equidistant grooves like radial grooves extending in such a direction as to intersect with the mate member, the grease retained in the grooves is supplied to the contact part little by little for a long time. As a result, the lubrication effect due to the retained grease can be sustainable for a long time.

### BRIEF EXPLANATION OF DRAWINGS

FIG. 1 is a sectional view of a main portion of a sealing device in accordance with a first embodiment of the present invention;
FIG. 2 is a sectional view showing the free state of the side lip in the sealing device shown in FIG. 1,
FIGS. 3 (A) and 3(B) are sectional views, each showing the operating state of the side lip in the sealing device,
FIG. 4 is a sectional view of a main part of a sealing device according to a second embodiment of the present invention,
FIG. 5 is a sectional view showing the free state of the side lip in the sealing device shown in FIG. 4,
FIG. 6 is a view taken in a direction indicated by arrow C in FIG. 5,
FIGS. 7 (A) and 7(B) are sectional views, each showing the operating state of the side lip in the sealing device,
FIG. 8 is a sectional view of a main part of a conventional sealing device,
FIG. 9 is a sectional view of a main part of another conventional sealing device, and
FIG. 10 is a sectional view showing the operating state of the side lip in the sealing device shown in FIG. 9.

### Description of Reference Numerals

1: sealing device
2: mounting ring
3: rubber-like elastic body
4: slinger
4a: cylindrical portion
4b: flange portion
4c: axially end surface
4d: outside end surface
5: main lip
6: side lip
6a: contact part
6b: non-contact part
6c: contact surface
9: parallel grooves
10: magnetic encoder
11: grease holding portion
12: annular groove
13: radial grooves

### DETAILED DESCRIPTION OF PREFERRED EMBODIMENT

A description will be next given of embodiments in accordance with the present invention with reference to the accompanying drawings.

### First Embodiment

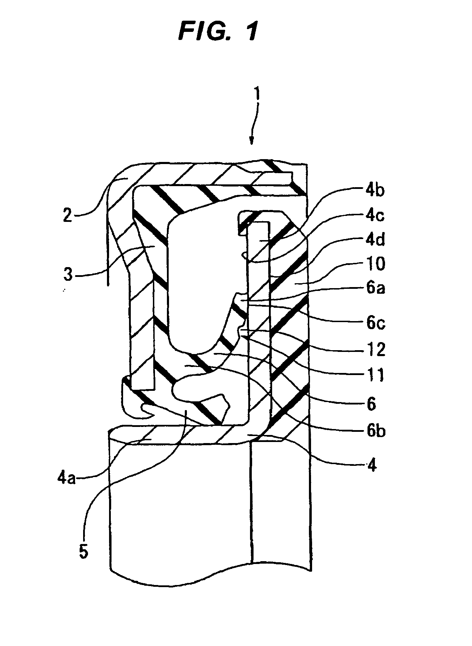

FIG. 1 shows a sectional view of a main portion of a sealing device 1 in accordance with a first embodiment of the present invention.

The sealing device 1 of this embodiment is used as a seal for a hub bearing (a hub seal) in a bearing portion in a wheel suspension apparatus for a motor vehicle for example. The sealing device 1 has a main lip (radial lip) 5 and a side lip (end face lip) 6 which are formed integrally by means of a rubber-like elastic body 3 that is vulcanized and bonded to a mounting ring (metal ring) 2 made of a rigid material such as a metal. The main lip 5 is configured to be slidably in tight contact with an outer peripheral surface of a cylindrical portion 4a of a slinger (metal ring) 4 as a sliding mate member. The side lip 6 is configured to be slidably in tight contact with an axially end surface (inner end surface) 4c of the flange portion 4b of the slinger 4. A magnetic encoder 10 may be attached to the outer end surface 4d of the flange portion 4b of the slinger 4 as shown in the figure.

Fig. 1 shows an assembly state of the slinger 4 in the sealing device 1, and the side lip 6 having a contact part 6a at its distal side and a non-contact part 6b at its proximal side which are formed integrally. In this state, the contact part 6a is elastically deformed by the slinger 4 and is slidably in tight contact with the axially end surface 4c of the flange portion 4b of the slinger 4, while the non-contact part 6b is not in contact with the slinger 4. It is probable that from this state the slinger 4 is displaced in an axial direction relatively to the sealing device 1, in consequence of surface shaking or the like of the slinger 4 due to unstable rotation of the shaft in the state of varying the direction of its rotational axis as mentioned above. When the slinger 4 is displaced in an axial direction relatively to the sealing device 1, the width of the contact part 6a of the side lip 6 and the lip tightening margin are increased or decreased.

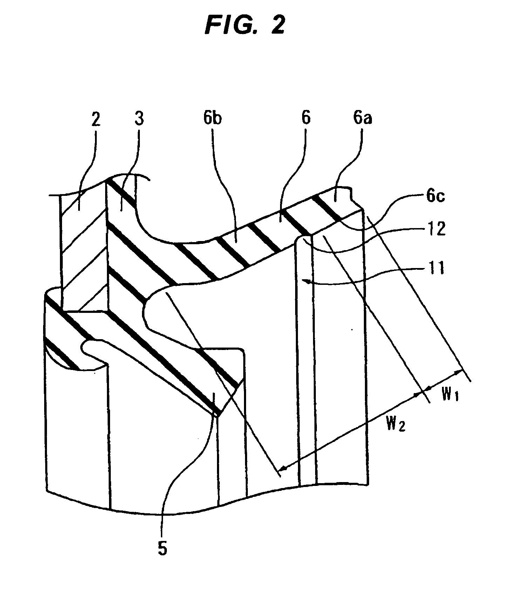

Fig. 2 shows a pre-assembly state of the slinger 4 in the sealing device 1, that is to say, a free state of the side lip 6 before the elastic deformation. As described above, the contact part 6a of the side lip 6 formed at its distal side is slidably in tight contact with the axially end surface 4c of the flange portion 4b of the slinger 4, and the contact part 6a has a given width (length) W₁. Also, the non-contact part 6b of the side lip 6 formed at its proximal side is not in contact with the slinger 4, and the non-contact part 6b has a given width (length) W₂. The sum of W₁ and W₂ (W₁+W₂) makes the overall width (total length) of the side lip 6, i.e. there is a relation that, when W₁ increases, W₂ will decrease, or when W₁ decreases, W₂ will increase.

The contact part 6a , the former, of the side lip 6 has a contact surface 6c to the slinger 4 with a cross section of a straight shape in a free state as shown in the figure. As described above, the width W₁ of the contact part 6a increases or decreases as the slinger 4 is displaced in an axial direction, however, the cross section of the contact surface 6c remains in a straight shape, even if the width W₁ of the contact part 6a takes a maximum value.

On the other hand, the grease holding portion 11 is provided at the non-contact part 6b of the side lip 6 for holding grease which is to be supplied to the contact part 6a. The grease holding portion 11 is located at the side of a contact surface (one side surface that is in contact with the slinger 4 among the two side surfaces of the side lip 6) of the side lip 6, and in this embodiment, the grease holding portion 11 is provided in the form of an annular groove 12. Functional concavity and convexity are not provided at all on any side surface of the side lip 6, except for the annular groove 12. The grease is supplied from the inside of the bearing.

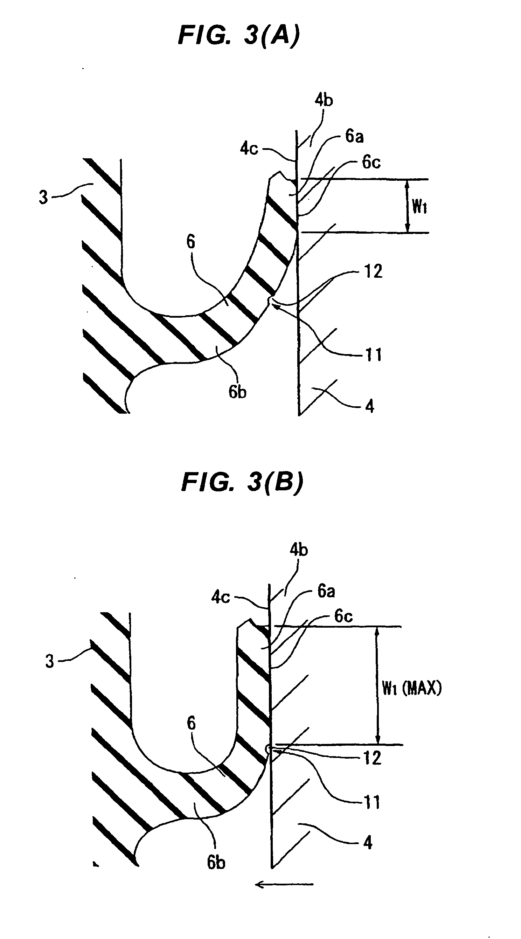

The grease holding portion 11 is arranged within an area of the non-contact part 6b when the width W₁ of the contact part 6a and the lip tightening margin take a predetermined normal value. When the width W₁ of the contact part 6a and the lip tightening margin become maximum, the boundary between the contact part 6a and the non-contact part 6b is shifted to the proximal side of the side lip 6 so that the grease holding portion 11 is brought to be positioned at the shifted boudary beween the both parts 6a, 6b. Therefore, the grease holding portion 11 is arranged at such a position that is slightly apart from the axially end face 4c of the flnge portion 4b of the slinger 4, as shown in Fig. 3(A), when the width W₁ of the contact part 6a and the lip tightening margin take a predetermined normal value. Further, when the width W₁ of the contact part 6a and the lip tightening margin become maximum, the grease holding portion 11 is brought to be arranged at such a position as to face the axially end face 4c of the flnge portion 4b of the slinger 4 as shown in Fig. 3(B). At this arrangement, the grease holding portion 11 is in contact with the slinger 4 at the side edge region of the annular groove 12 locating at the lip distal side, but is apart from the slinger 4 at the other side edge region of the annular groove 12 locating at the lip proximal side (the annular groove 12 itself is not covered by the slinger 4 or not in contact with the slinger 4, but remains to be in an open state). Therefore, the side edge at the lip distal side of the annular groove 12 defines a boundary, so that the lip distal side of the annular groove 12 becomes a contact part 6a contacting with the slinger 4, while the lip proximal side of the annular groove 12 becomes a non-contact part 6b not contacting with the slinger 4.

### Second Embodiment

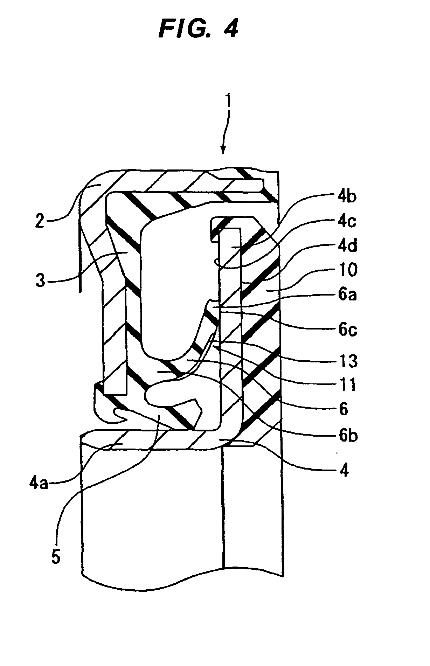

FIG. 4 shows a sectional view of a main portion of a sealing device 1 in accordance with a second embodiment of the present invention.

The sealing device 1 of this embodiment is used as a seal for a hub bearing (hub seal) in a bearing portion in a wheel suspension apparatus for a motor vehicle for example, like the first embodiment. The sealing device 1 has a main lip 5 and a side lip 6 which are formed integrally by means of a rubber-like elastic body 3 that is vulcanized and bonded to a mounting ring 2 made of a rigid material such as a metal. The main lip 5 is configured to be slidably in tight contact with an outer peripheral surface of a cylindrical portion 4a of a slinger 4 as a sliding mate member. The side lip 6 is configured to be slidably in tight contact with an axially end surface 4c of the flange portion 4b of the slinger 4. A magnetic encoder 10 may be attached to the outer end surface 4d of the flange portion 4b of the slinger 4 as shown in the figure.

Fig. 4 shows an assembly state of the slinger 4 in the sealing device 1, and the side lip 6 having a contact part 6a at its distal side and a non-contact part 6b at its proximal side, which are formed integrally. In this state, the contact part 6a is elastically deformed by the slinger 4, and is slidably in tight contact with the axially end surface 4c of the flange portion 4b of the slinger 4, while the non-contact part 6b is not in contact with the slinger 4. It is probable that from this state the slinger 4 is displaced in an axial direction relatively to the sealing device 1, in consequence of surface shaking or the like of the slinger 4 due to unstable rotation of the shaft in the state of varying the direction of its rotational axis as mentioned above. When the slinger 4 is displaced in an axial direction relatively to the sealing device 1, the width of the contact part 6a of the side lip 6 and the lip tightening margin are increased or decreased.

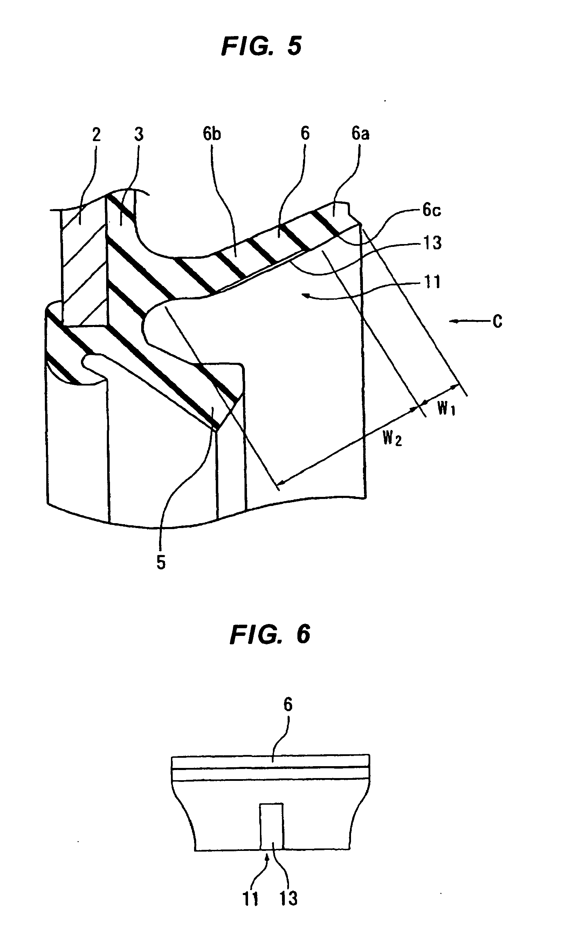

Fig. 5 shows a pre-assembly state of the slinger 4 in the sealing device 1, that is to say, a free state of the side lip 6 before the elastic deformation. As described above, the contact part 6a of the side lip 6 formed at its distal side is slidably in tight contact with the axially end surface 4c of the flange portion 4b of the slinger 4, and the contact part 6a has a given width W₁. Also, the non-contact part 6b of the side lip 6 formed at its proximal side is not in contact with the slinger 4, and the non-contact part 6b has a given width W₂. The sum of W₁ and W₂ makes the overall width of the side lip 6, i.e. there is a relation that, when W₁ increases, W₂ will decrease, or when W₁ decreases, W₂ will increase.

The contact part 6a, the former, of the side lip 6 has a contact surface 6c to the slinger 4 with a cross section of a straight shape in a free state as shown in the figure. As described above, the width W₁ of the contact part 6a increases or decreases as the slinger 4 is displaced in an axial direction, however, the cross section of the contact surface 6c remains in a straight shape, even if the width W₁ of the contact part 6a takes a maximum value.

On the other hand, the grease holding portion 11 is provided at the non-contact part 6b of the side lip 6 for holding grease which is to be supplied to the contact part 6a. The grease holding portion 11 is located at the side of a contact surface (one side surface that is in contact with the slinger 4 among the two side surfaces of the side lip 6) of the side lip 6, and in this embodiment, the grease holding portion 11 is provided in the form of a plurality of radial grooves 13 as shown in Figs. 5 and 6 (only one radial groove is shown in the figures). The radial grooves 13 are provided at equally spaced intervals. Functional concavity and convexity are not provided at all on any side surface of the side lip 6, except for the radial grooves 13. The grease is supplied from the inside of the bearing.

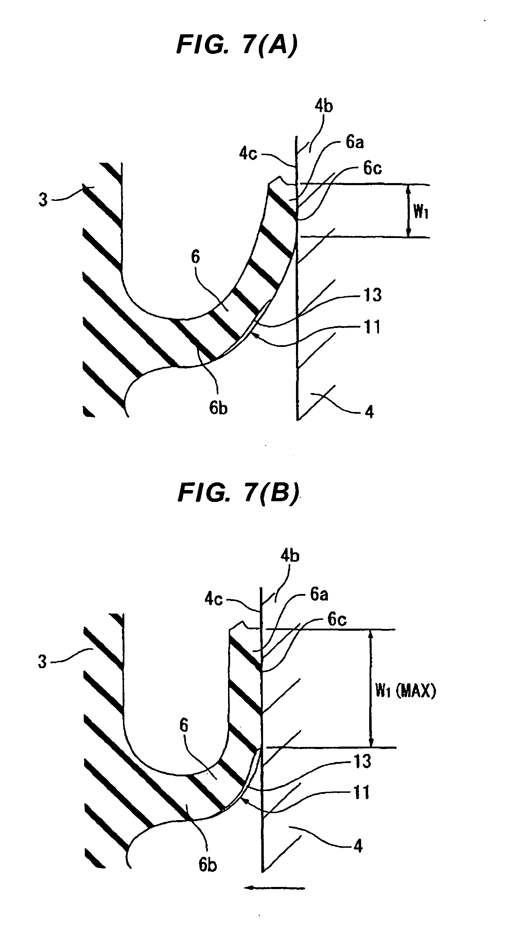

The grease holding portion 11 is arranged within an area of the non-contact part 6b when the width W₁ of the contact part 6a and the lip tightening margin take a predetermined normal value. When the width W₁ of the contact part 6a and the lip tightening margin become maximum, the boundary between the contact part 6a and the non-contact part 6b is shifted to the proximal side of the side lip 6 so that the grease holding portion 11 is brought to be positioned at the shifted boundary between the both parts 6a, 6b. Therefore, the grease holding portion 11 is arranged at such a position that is slightly apart from the axially end face 4c of the flange portion 4b of the slinger 4 as shown in Fig. 7(A), when the width W₁ of the contact part 6a and the lip tightening margin take a predetermined normal value, and when the width W₁ of the contact part 6a and the lip tightening margin become maximum, the grease holding portion 11 is brought to be arranged at such a position as to face the axially end face 4c of the flange portion 4b of the slinger 4 as shown in Fig. 7 (B) . At this arrangement, the grease holding portion 11 is in contact with the slinger 4 at the side edge region of the radial groove 13 locating at the lip distal, but is apart from the slinger 4 at the other side edge region of the radial groove 13 locating at lip proximal side (the radial groove 13 itself is not covered by the slinger 4 or not in contact with the slinger 4, but remains to be in an open state). Therefore, the side edge at the lip distal side of the radial groove 13 defines a boundary, so that the lip distal side of the radial groove 13 becomes a contact part 6a contacting with the slinger 4, while the lip proximal side becomes a non-contact part 6b not contacting with the slinger 4.

In the first and second embodiments, since the cross section of the contact surface 6c on the contact part 6a of the side lip 6 is of a straight shape in a free state, there is provided no concavity on the contact part 6a or contact surface 6c that might render the contact state unstable like the parallel grooves 9 in the conventional device, whereby the contact part 6a or contact surface 6c can be stably and slidably in tight contact with the slinger 4 as a mate member along its overall width. As a result, the contact state of the side lip 6 to the slinger 4 can be stabilized, thereby to attain stable sealing performance.

Furthermore, according to the first and second embodiments, lubricating grease can be supplied stably from the grease holding portion 11 to the contact part 6a, since the grease holding portion 11 is brought to be positioned at a boundary between the contact part 6a and the non-contact part 6b when the width W₁ of the contact part 6a and the lip tightening margin become maximum. Therefore, increase in sliding resistance of the side lip 6 can be suppressed by the lubricating function of the grease, and generation of abrasion due to sliding movement can also be suppressed.

Further, in accordance with the first embodiment, the side lip 6 can be improved in flexibility, since the grease holding portion 11 provided on the non-contact part 6b of the side lip 6 is formed as the annular groove 12, whereby the sliding resistance of the side lip 6 can be reduced. Further, it can be expected for the distal end of the side lip 6 not to become separated from the slinger 4 when the lip tightening margin becomes large.

Furthermore, according to the second embodiment, since the grease holding portion 11 provided on the non-contact part 6b of the side lip 6 is formed in a plurality of radial grooves 13 extending in such a direction as to intersect with the axially end surface 4c of the slinger 4, the grease being retained in the grooves 13 is supplied to the contact part 6a little by little for a long time. As a result, the lubrication effect due to the retained grease can be sustainable for a long time.

In common with the first and second embodiments, it is preferable that the depth of the grease holding portion 11, i.e. the depth of annular groove 12 or radial groove 13 is 1/3 or less of the thickness of the side lip 6. Further, cross the sectional shape of the annular groove 12 or radial groove 13 is circular arc, but it should not be limited to this. The sectional shape may be, for example, rectangle, triangle or the like.

## Claims

1. A sealing device comprising a side lip (6) brought into slidably in tight contact with a mate member,
the side lip (6) having a contact part (6a) at its distal side brought to be slidably in tight contact with the mate member and a non-contact part (6b) at its proximal side not in contact with the mate member,
and the side lip (6) being configured so that the width (W₁) of the contact part (6a) and lip tightening margin are increased or decreased when the mate member is displaced in an axial direction relatively to the side lip (6),
wherein said contact part (6a) of the side lip (6) has a contact surface (6c) having a cross section of a straight shape in a free state,
said non-contact part (6b) of the side lip (6) has a grease holding portion (11) for holding grease which is to be supplied to the contact part (6a), and
said grease holding portion (11) provided at the non-contact part (6b) of the side lip (6) is arranged at such a position as to be a boundary between the contact part (6a) and the non-contact part (6b) when the width (W₁) of the contact part (6a) and the lip tightening margin become maximum, **characterized in that**
the grease holding portion (11) comprises an annular groove (12) formed on a surface of the non-contact part (6b), or
the grease holding portion (11) comprises radial grooves (13) equidistantly formed on a surface of the non-contact part (6b).

## Patentansprüche

1. Dichtungsvorrichtung mit einer Seitenlippe (6), die mit einem Gegenelement in engen, gleitfähigen Kontakt gebracht wird,
wobei die Seitenlippe (6) einen Kontaktabschnitt (6a), der mit dem Gegenelement gleitfähig in engen Kontakt gebracht wird, an ihrer distalen Seite, und einen kontaktfreien Abschnitt (6b), der mit dem Gegenelement nicht in Kontakt ist, an ihrer proximalen Seite hat,
und wobei die Seitenlippe (6) derart konfiguriert ist, dass die Breite (W₁) des Kontaktabschnitts (6a) und ein Lippendichtungsrandbereich vergrößert oder verkleinert werden, wenn das Gegenelement in der Achsrichtung relativ zu der Seitenlippe (6) verschoben wird,
wobei der Kontaktabschnitt (6a) der Seitenlippe (6) eine Kontaktfläche (6c) mit einem Querschnitt einer geraden Form in einem freien Zustand hat,
wobei der kontaktfreie Abschnitt (6b) der Seitenlippe (6) einen Schmiermittelhalteabschnitt (11) zum Halten von zu dem Kontaktabschnitt (6a) zuzuführenden Schmiermittel hat, und
der Schmiermittelhalteabschnitt (11), der an dem kontaktfreien Abschnitt (6b) der Seitenlippe (6) vorgesehen ist, an einer solchen Position angeordnet ist, dass er eine Grenze zwischen dem Kontaktabschnitt (6a) und dem kontaktfreien Abschnitt (6b) ist, wenn die Breite (W₁) des Kontaktabschnitts (6a) und der Lippendichtungsrandbereich maximal werden, **dadurch gekennzeichnet, dass**
der Schmiermittelhalteabschnitt (11) eine ringförmige Nut (12) aufweist, die an einer Fläche des kontaktfreien Abschnitts (6b) ausgebildet ist, oder
der Schmiermittelhalteabschnitt (11) radiale Nuten (13) aufweist, die bei gleichen Abständen an einer Fläche des kontaktfreien Abschnitts (6b) ausgebildet sind.

## Revendications

1. Dispositif d'étanchéité comprenant une lèvre latérale (6) amenée de manière coulissante en contact étroit avec un élément d'accouplement,
la lèvre latérale (6) ayant une partie de contact (6a) au niveau de son côté distal qui est amenée à être mise par coulissement en contact étroit avec l'élément d'accouplement et une partie de non-contact (6b) au niveau de son côté proximal qui n'est pas en contact avec l'élément d'accouplement,
et la lèvre latérale (6) étant configurée de sorte que la largeur (W₁) de la partie de contact (6a) et la marge de rétrécissement de la lèvre soient augmentées ou diminuées lorsque l'élément d'accouplement est déplacé dans une direction axiale par rapport à la lèvre latérale (6),
dans lequel ladite partie de contact (6a) de la lèvre latérale (6) a une surface de contact (6c) ayant une section transversale d'une forme rectiligne dans un état libre,
ladite partie de non-contact (6b) de la lèvre latérale (6) a une partie de maintien de graisse (11) pour maintenir la graisse qui doit être fournie à la partie de contact (6a), et
ladite partie de maintien de graisse (11) prévue au niveau de la partie de non-contact (6b) de la lèvre latérale (6) est disposée à une position de manière à être une limite entre la partie de contact (6a) et la partie de non-contact (6b) lorsque la largeur (W₁) de la partie de contact (6a) et la marge de rétrécissement de la lèvre deviennent maximales, **caractérisé en ce que**
la partie de maintien de graisse (11) comprend une rainure annulaire (12) formée sur une surface de la partie de non-contact (6b), ou
la partie de maintien de graisse (11) comprend des rainures radiales (13) formées de manière équidistante sur une surface de la partie de non-contact (6b).
